# EUROPEAN PATENT SPECIFICATION

(11) **EP 4 001 998 B1**
(45) Date of publication and mention of the grant of the patent: **17.07.2024**
(21) Application number: 20306423.3
(22) Date of filing: 20.11.2020
(51) Int. Cl.: G02C 13/00, G05B 19/42, G05B 19/4093, B24B 47/22, B24B 9/14, G05B 19/18

(54) **SYSTEM AND PROCESS FOR EDGING OPHTHALMIC LENSES**
SYSTEM UND VERFAHREN ZUM KANTEN VON OPHTHALMISCHEN LINSEN
SYSTÈME ET PROCÉDÉ POUR LE DÉBORDAGE DE LENTILLES OPHTALMIQUES

(43) Date of publication of application: 25.05.2022
(73) Proprietor: ESSILOR INTERNATIONAL, 94220 Charenton-Le-Pont (FR)
(72) Inventor: HERFORT, David, 94220 CHARENTON LE PONT (FR)
(74) Representative: Jacobacci Coralis Harle

(56) References cited:
- EP-A1- 3 654 087
- WO-A2-2008/155481
- US-A- 4 656 590
- US-B2- 8 926 401

## Description

### TECHNICAL FIELD OF THE INVENTION

The present invention generally relates to the field of eyeglasses.

It more particularly relates to a system and a process for machining the edges of ophthalmic lenses.

### BACKGROUND INFORMATION AND PRIOR ART

The technical part of the work of an optician, which consists in mounting a pair of ophthalmic lenses in a spectacle frame selected by a wearer, can be split into four main operations:
- the acquisition of the shapes of the outlines of the rims of the spectacle frame selected by the wearer,
- the centering of each ophthalmic lens, which consists in determining the frame of reference of the lens using centering markings provided thereon, then in suitably positioning the outline of the rim acquired beforehand in the frame of reference of the lens so that, once edged to this outline then mounted in its frame, the lens is correctly positioned with respect to the corresponding eye of the wearer and fulfils as best as possible the optical function for which it was designed,
- the blocking of each lens, which consists in attaching a blocking accessory to the lens, so that the lens can be easily extracted from the centering station and then be engaged in the edging station without loss of frame of reference, then
- the edging of each lens, which consists in machining this lens to the outline centered beforehand.

Here, the first operation is more particularly of interest.

This operation is generally carried out by an optician, using an outline-reading apparatus including a surface profilometer that is slid along the grooves of the frame rims.

This outline-reading apparatus then allows the shape of the bottom of the bezel to be registered in order to allow the lens to be machined in such a way that the top of its bevel has a homologous shape to that of the bezel.

The major drawback of this solution is that it requires an outline-reading apparatus to be used, the purchase and maintenance costs of which are high.

It is moreover time-consuming to implement and requires great care to be taken by the optician, this running contrary to the sought-after principle of simplicity.

It is also known from the art to prepare a pair of eyeglasses differently. For example, it is possible for the optician to send the frame to a laboratory for edging, together with data for surfacing the lens. In this example, the laboratory is in charge of tracing the frame, surfacing the lens and edging the lens to mount it in the frame. In a variant, the optician may only send the name of the model of frame selected by the client together with data for surfacing the lens, this laboratory having a stock of frames. In both variants, the problems raised hereunder still apply.

We also know from the related art a database memorizing raw information relative to frames, but this database is only used for feasibility calculation or for a few kind of lenses. Such lenses are for instance lenses to be mounted on rimless frames or on very flexible frames or on frames having low outline dispersions.

We also note that production sites cannot take the risk of using the raw information stored in the database without control on it. The result would indeed be an inaccurate machining of the lenses, which would result on a need of re-machining the lens or of machining a new lens with other settings (the delivery being thus delayed). That are the reasons why outline-reading apparatuses are still used.

For instance, document EP 3 654 087 A1 relates to the production of eyeglasses comprising a frame and two lenses, by additive manufacturing.

Documents US 8 926 401 B and US 4 656 590 A relate to a shaping method for shaping an ophthalmic lens for mounting in an eyeglass frame.

In these three documents, in view of the acquisition of the shapes of the outlines of the rims, frame data are stored in a frame database.

Creating a database with all frame information is also time consuming and is therefore not conceivable for an optician or a laboratory.

### SUMMARY OF THE INVENTION

In order to remedy this drawback, the present invention proposes a solution allowing the shape of the eyewear frame to be obtained less expensively.

To this end, the present invention provides a system for edging ophthalmic lenses as stated in claim 1.

According to the invention, the first database table comprises data that can be used by every user of centering and edging machines (optician, lens production centers... all named hereinafter "customer"). On the contrary, the second database table comprises data that are specific to one customer.

In other words, the idea of the invention is to separate core information and local parameters to fine-tune the data according to the specific requirements of the customer, without interfering with the requirements of other customers.

Principle of a mutualized first database table is to reduce efforts in creating it, to obtain a true reference database table with large amount of qualitative core information. This core information is determined for instance by the frame manufacturer. It is identified in the first database by an ID.

This ID may have several formats. It could be composed of:
- a standard code (EAN, UPC, JAN, GTIN,..), or
- a combination of those standard codes, or
- a combination of characteristics (for instance "the name of the frame model", the "color" and the "size"), or
- a combination of at least one of these standard code and at least one of these characteristics, or
- a combination of at least one of these standard code and at least one of these characteristics and the batch code, or
- a code chosen by the frame manufacturer.

An example of frame ID would be the combination of the GTIN code, the frame name, the batch number and the name of the frame manufacturer.

Principle of a separated second database table is to let each customer having his own settings. Thus, production can adjust the setpoint to its local conditions. These conditions, named "lab signature", are for instance local temperature, local humidity, equipment used, customers habits, required polishing level, eventually the centering or edging machine used.

By extension, the use of this second database table allows cross participation and synergies between database customers for a collaborative work. In this situation, the second database table can be feed not only by a restricted qualified core team but also by every customer.

It also allows:
- to facilitate the duplication of data of the first database to manage, for instance, model declination where some features (brand, name, color...) are the same, but where some geometrical characteristics (shape, size...) change,
- to improve the data stored in the first and/or second database tables, by regularly correcting and adapting them, and/or by completing them in order to improve the efficiency of the system,

- to facilitate the creation of new reference in the first database table, by looking for analog data into the database table and by proposing to copy and paste these data,
- to facilitate the management of a batch of frames of the same model, by assigning specific offset parameters to this batch.

Thanks to the data recorded in the second database, the processing unit can also modify the shape of the frame trace read in the first database under certain conditions, for instance only if the characteristics of this frame meet a requirement (for instance only if the frame is in plastic).

Other preferred features of the invention are described in claims 2 to 10.

The invention also relates to a method for edging an ophthalmic lens in order to mount it into an eyewear frame, as stated in claim 11.

Other preferred features of the invention are described in claims 12 and 13.

### DETAILED DESCRIPTION OF EXAMPLE(S)

The following description with reference to the accompanying drawings, given by way of non-limiting example makes it clear what the invention consists in and how it can be reduced to practice.

In the accompanying drawings:
- Figure 1 is a schematic view of a system according to the invention,
- Figure 2 is a diagrammatic perspective view of a centering and blocking appliance, and
- Figure 3 is a diagrammatic perspective view of a shaper appliance.

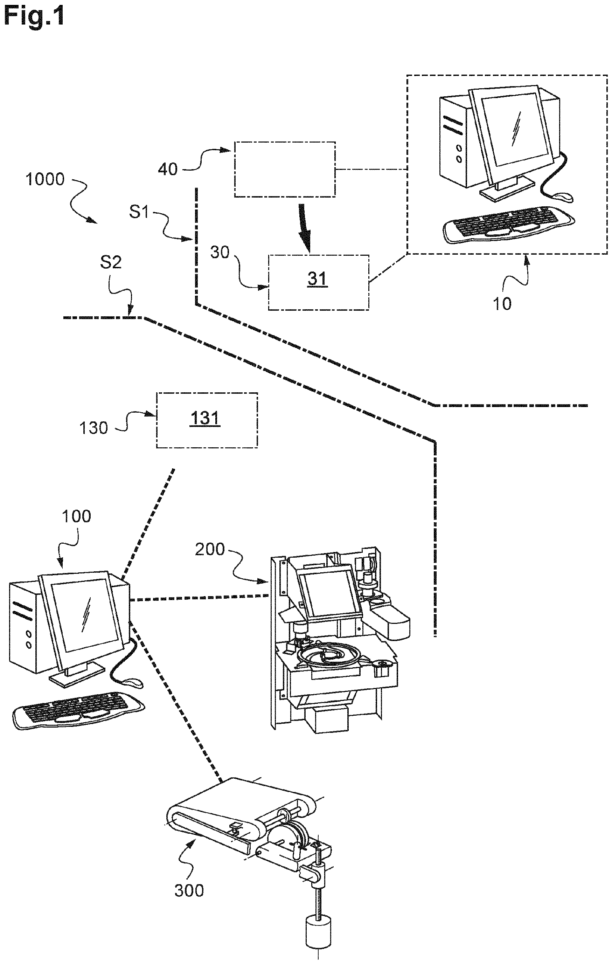

In figure 1 is represented a system 1000 for implementing operations enabling the edging of ophthalmic lenses.

These operations are implemented in part on the premises S1 of a central organization, and in part on the premises S2 of one or several user(s), named hereinafter "customer(s)".

The premises S1 of the central organization are for instance an office of an ophthalmic lens manufacturer.

The premises S2 of the customer(s) are for example an office of an optician or of a lens laboratory chain.

In the following, it will be considered that the premises S2 belong to a single customer (an optician). In a variant, we will also contemplate the case where the premises S2 belong to a lens laboratory chain working with several clients (it will be specified in the text when we will do so).

In both cases, the central organization premises S1 will be adapted to work with several premises S2.

The optician's premises S2 includes appliances 100, 130, 200, 300 that enable the optician, on receiving unshaped ophthalmic lenses, to prepare those ophthalmic lenses in order to be able to mount them on the eyeglass frame selected by a **the future "wearer"** of the **eyeglasses.**

In this example, these appliances include a first database 130, a centering and blocking appliance 200, and a shaper appliance 300, all of which are controlled by a processing unit 100.

The centering and blocking appliance 200 serves to center the outlines on the ophthalmic lenses in such a manner that once they are mounted on the frame, the lenses are properly centered relative to the wearer's eyes when looking at infinity. It is also adapted to block the lens.

The shaper appliance 300 serves to shape the ophthalmic lenses 20 so as to follow those outlines.

These appliances are controlled according to edging setpoints calculated by the processing unit 100.

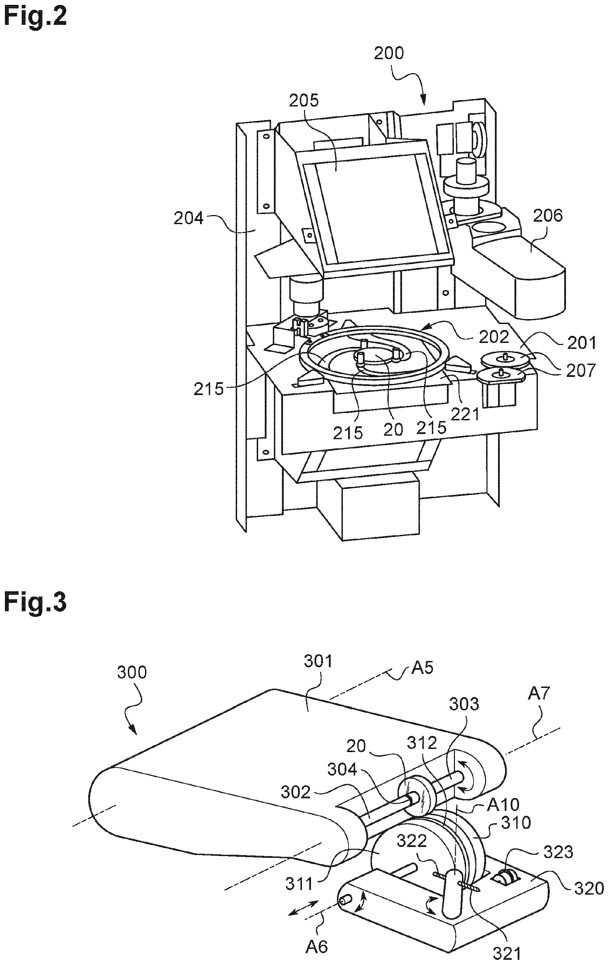

Figure 2 shows an embodiment of a centering and blocking appliance 200 in greater detail.

This appliance is designed firstly to identify the positions of centering marks on the ophthalmic lens 20 that is to be prepared, and secondly to block the ophthalmic lens 20 by placing a blocking accessory on its front face.

This centering and blocking appliance 200 is well known to the person skilled in the art and does not itself form the subject matter of the invention described. Its architecture and its operation are described in detail, for example in patent document EP 1 722 924.

We can only specify that, as shown in Figure 2, this appliance comprises:
- a support structure 204 arranged to define a work bench 201 accessible to the optician,
- a holder mechanism 202 for holding the ophthalmic lens 20 that is being prepared, the mechanism having a set of at least three concentrically-clamping jaws 215,

- means for optically centering said ophthalmic lens 20,
- a display screen 205 fastened to the support 204, and
- blocking means 206 for blocking the ophthalmic lens 20.

In this example, the centering means comprise a transparent support plate 221 arranged beneath the holder mechanism 202, lighting means for lighting the ophthalmic lens 20 and arranged under the holder mechanism 202, and means for acquiring and analyzing the light transmitted by said ophthalmic lens 20 through the support plate 221. In this example these acquisition and analysis means comprise a digital camera. The acquisition and analysis means also include image processor means adapted to process the signal obtained at the output from the digital camera, and display means for displaying the processed signal and constituted by the display screen 205.

These centering means serve in particular to acquire an image of the ophthalmic lens 20 and of its centering marks, and to deduce therefrom the position of the optical frame of reference of the ophthalmic lens 20.

The blocking means comprise a positioning arm 206 that is preferably automatic and that is connected to the support structure 204. The positioning arm 206 is adapted to use a clamp to take one of the blocking accessories arranged on one of the receptacles 207 provided on the support stand 204 and to position the block at a location on the front face of the ophthalmic lens 20 that is determined as a function of the acquired position of the optical frame of reference of said lens.

The blocking accessory thus forms a position-identifying mark representative of the position of the optical frame of reference of the ophthalmic lens as acquired by the optical centering means. It is for engaging in a corresponding socket of the shaper appliance 300 so that the appliance acquires the position of the optical frame of reference of the ophthalmic lens.

In a variant, the blocking may be done without such an accessory. In this variant, the blocking would consist in determining the position of the optical frame of reference of the ophthalmic lens and in registering it in a memory, so as to be able to block the lens in the edging machine while keeping in memory where is this optical frame of reference. In this variant, the blocking can then be ensured directly (without using block nor sticky pads), by the mean of suction vacuum integrated to the arms of the shaper appliance.

The shaper appliance is likewise well known to the person skilled in the art and does not itself form the subject matter of the invention described. It may be embodied in the form of any machine for cutting or removing material that is suitable for modifying the outline of the ophthalmic lens 20 in order to adapt it to the shape of the selected frame.

As shown in Figure 3, this appliance is for instance constituted by a grinder 300 that is automatic, i.e. numerically controlled. Specifically, the grinder comprises:
- a rocker 301 that is controlled to pivot about a reference axis A5, in practice a horizontal axis, relative to a frame that is not shown;
- a grindwheel-carrier carriage that is controlled to rotate about a grindwheel axis A6 parallel to the reference axis A5, that is controlled to move in translation along the grindwheel axis A6, and that carries grindwheels 310, 311 that are driven in rotation about the axis A6 by a motor that is not shown; and
- a finishing module 320 that is controlled to pivot about the grindwheel axis A6 in order to move towards or away from the ophthalmic lens 20 and that carries means for finishing the ophthalmic lens 20.

The rocker 301 is fitted in particular with two shafts 302, 303 for clamping the ophthalmic lens 20 and driving it in rotation about a blocking axis A7 parallel to the axis A5. A first of the two shafts 302 is stationary in translation along the blocking axis A7. The second of the two shafts 303 is on the contrary movable in translation along the blocking axis A7 in order to clamp the ophthalmic lens 20 by applying axial compression thereto.

The first shaft 302 is fitted at its end with a non-removable accessory 304 for blocking the lens. The second shaft 303 is fitted with means for receiving the blocking accessory previously placed on the ophthalmic lens 20 by the arm 206 of the centering and blocking appliance 200.

The set of grindwheels carried by the grindwheel carriage includes a cylindrical shaper grindwheel 310 that serves to rough-out the ophthalmic lens 20 in such a manner as to bring its initially circular outline to a shape close to the desired shape. It also includes a beveling grindwheel 311 for forming an engagement ridge on the edge face of the ophthalmic lens 20 for mounting in a rimmed eyeglass frame.

The finishing module 320 carries a finishing wheel 323 controlled to rotate about an axis parallel to the blocking axis A7 in order to groove, chamfer, and polish the ophthalmic lens 20. It also carries a post that carries a drilling tool 321 and a milling tool 322 for acting on the ophthalmic lens 20, and that is mounted to pivot about an axis A10 orthogonal to the blocking axis A7 in order to select one or the other of these two tools in order to mill or drill the lens.

In a variant, the shaper appliance may have a different shape. For instance, it may use milling tools or dry cutting tools or combined tools...

Moreover, we note that figure 3 shows an embodiment of a grinder but it does not represent an industrial edger which would be more likely used in a lens laboratory chain. Consequently, in a variant, the customer may use a shaper appliance different from the one shown in figure 3, for instance the industrial edger marketed by the Applicant under the reference "Pro-E600 edger".

The processing unit 100 shown in Fig.1 is used for controlling the two appliances 200, 300, and particularly to calculate edging setpoints to be sent to these appliances 200, 300.

It is represented as being remote from these appliances but, in a variant, it could be integrated in one or the other of these appliances.

The processing unit comprises a processor, a memory and various input and output interfaces.

Thanks to its output interfaces, the processing unit is suitable for communicating with the database 130, the two appliances 200, 300 and with a control unit 10 situated in the central organization premises S1.

Thanks to its memory, the processing unit stores a computer application, consisting of computer programs comprising instructions, the execution of which by the processor enables the processing unit to implement the process described below.

The control unit 10 in the central organization premises S1 comprises a processor, a memory and various input and output interfaces.

Thanks to these interfaces, the control unit 10 is able to communicate with a measuring unit 40 designed to acquire some information about eyeglasses frames and with a database 30.

The measuring unit 40 is able to acquire geometric information about eyeglasses frames.

More precisely, as it will be explained in more detail below, each time a new kind of frame (namely a new model of frame) is to be used by an optician or a customer, this geometric information is acquired and stored in the database 30. Once stored, this frame model is considered as referenced.

As explained, in the shown embodiment, the system 1000 comprises two databases, a first one illustrated in the central organization premises S1 and the second one illustrated in the optician's premises S2.

The first database, named hereinafter central database 30, comprises at least one table 31 that includes data relating to the referenced eyewear frames.

The second database, named hereinafter optician's database 130, comprises at least one table 131 that includes data relating to corrections to apply to the data stored in the central database 30.

The first database comprises data accessible to every customers and the second database comprises customized information for local use, thus allowing each customer having his own local parameters to fine-tune the information stored in the first database, according to his specific requirements.

Consequently, in the shown embodiment, the central database 30 is accessible to every customer affiliated to the central organization (opticians, lens laboratory chain...) when the optician's database 130 is only accessible to the optician.

In the variant where the premises S2 are the one of a lens laboratory chain, the second database is accessible to all the clients of this lens laboratory chain.

The central database 30 may comprise various tables 31. For clarity reasons, it will be considered here that it only has a single table 31.

This table 31 comprises various attributes (the columns of the table) and several records (the rows) each associated with a model of referenced eyewear frame.

Preferably, the records only include invariant data that are registered once and for all by the central organization. In a variant, these data can be regularly corrected by the central organization when it is necessary.

One of the attributes is an identifier of the model of referenced eyewear frame.

At least another of the attributes is a geometric characteristic of this referenced eyewear frame.

In practice, the table comprises a great number of attributes to store a large amount of information that are determined and measured on a frame sample or that are given by the frame manufacturer.

In practice, the table 31 comprises at least one of the following attributes, and preferably all these attributes:
- an identifier of the frame model, with ou without a batch ID,
- an identifier of the frame manufacturer,
- the frame type (rimless or rimmed or half-rimmed),
- the frame color,
- frame size information (the height and the width of the rims, the length of the bridge, the length of the temples, the groove size and shape, the pantoscopic angle...),
- the frame trace (that is the coordinates of a characteristic number of points that represent the shape of the outline of the rim),
- the frame material,
- the frame wearer gender ...

The frame model identifier can be a code determined by the frame manufacturer or by the central organization.

In a variant, this identifier can be determined as a function of the values of the attributes, making a unique identifier.

The optician database 130 may comprise various tables 131. For clarity reasons, it will be considered here that it has two tables 131.

The first table 131 comprises various attributes and at least one record when the second table comprises at least one attribute and several records.

The value(s) registered in the first table 131 comprise(s) a corrective parameter to be applied to the data read in the central database 30.

An example of such a corrective parameter is a coefficient for a homothety to be applied to the frame trace (enabling to take into account that the temperature conditions in the optician's workshop are different from the conditions in other sites).

This corrective parameter is here an offset A registered in the first table 131. In a variant, it could be a linear offset having the form "Ax + B" (x being for instance a polar coordinate of a point of said trace, A and B being values recorded in the first table), or even a more complex offset.

The optician's database 130 does not only comprise only one corrective parameter to be applied to a single datum recorded in the central database (for instance to the trace).

It comprises various corrective parameters to be applied to corresponding data recorded in the central database.

The value of a corrective parameter can depend on predetermined conditions. For instance, the value of the corrective parameter can differ according to the frame manufacturer, or the frame type, or the frame material...

This corrective parameter value can be determined by the optician or by a machine learning algorithm, as a function of the results of the edging previously done on other lenses.

In the shown embodiment where the database 130 belongs to a single customer (the optician), the values recorded in this database depend on the location of the optician and on the location of the appliances 200, 300.

The values recorder in this database are under responsibility of the optician.

In the variant where the database 130 is shared between several clients of a lens laboratory chain, some of the values recorded in this database can depend on the locations of the client s when other depend on the location of the appliances 200, 300.

In this variant, some of the corrective parameters can be used for all the clients when other parameters are used only for a few numbers of clients. A collaborative work is preferred to contribute to the enrichment of this database.

In a preferred embodiment, the second table of the optician's database 130 comprises feedback information relating to the accuracy of the mounting of a previously edged ophthalmic lens 20 into its frame.

Indeed, after having edged a lens and after having mounted it in the selected frame, the optician can evaluate the result in terms of sizing (or in terms of fitting or aesthetic). This evaluation can be a qualitative evaluation (1 to 5 stars for instance) or a fitting appreciation (the lens is too small, small, ok, big, too big).

This feedback information can be stored in the second table and can allow to readjust the corrective parameters registered in the first table 131 when needed, considering not only one evaluation but a great number of evaluations.

This correction preferably depends on the dynamic evolution of the evaluation (enabling for instance to take into account that the tools of the shaping appliance progressively spoil).

At this step, we can explain how the process for the preparation of an ophthalmic lens is implemented.

The first step consists, for the optician, to let the wearer selecting a frame among the frame that are already referenced.

Then, the second step consists in ordering two lenses that correspond to the prescription of the wearer.

When the optician receives these lenses, the outlines of these lenses are round. That is why these lenses need to be edged so that their contours correspond to the ones of the rims of the selected frame.

Then, the optician can determine the shape of the contours along which each lens has to be edged, and the positions of the eyes of the wearer relative to the contours of the selected frame rims (named hereinafter "pupillary position").

To determine the shape of the contours, he can use the processing unit 100 to search in the central database 30 for a record associated to the identifier of the model of the selected frame.

In this record, the processing unit read every relevant information. For instance, it can retrieve in this record the shape of the trace of each frame rim.

According to the invention, this information is not directly used, but at least a piece of this information is corrected thanks to the corrective parameters registered in the optician's database 130.

In our illustrative example, the shape of the trace is corrected by the coefficient of homothety, the value of which is registered in the first table 131 and depends for instance on the frame manufacturer, the frame material and the feedback information recorded in the second table.

On the basis of this corrected piece of information, the processing unit 100 is programmed to calculate two edging setpoints, one for each appliance 200, 300.

We note that an edging setpoint is a file that includes the parameters needed by an appliance to center and/or block and/or edge a lens.

Then, the ophthalmic lens 20 is blocked between the three jaws 215 of the centering and blocking appliance 200.

In this position, the marks on the ophthalmic lens are read in order to determine the position of its optical center.

The outline along which the lens is to be edged (named hereinafter "final outline") is then positioned and oriented relative to the ophthalmic lens 20.

To this end, the centering and blocking appliance 200 uses the first edging setpoints in which are stored the corrected trace and the pupillary position.

Then, the manipulator arm 206 of the centering and blocking appliance 200 proceeds to block the ophthalmic lens 20. For this purpose, it takes hold of one of the blocking accessories available on one of the receptacles 207 provided on the support structure 204 and then places it on the front face of the ophthalmic lens 20 at the geometrical center (also known as the "boxing center") of the final outline.

Finally, the optician positions the ophthalmic lens 20 with its blocking accessory between the two shafts 302 and 303 of the shaper appliance 300. The optician then uses a pushbutton to cause these two shafts to move towards each other so that the lens is sandwiched between them. The electronic unit provided in the shaper appliance 300 then controls the shaping in two operations, a roughing-out operation and a finishing operation.

For roughing-out the lens, use is made either of the cylindrical grindwheel 210 so as to reduce the radii of the lens approximately.

In order to finish the lens, one of the following is selected:
· the beveling grindwheel 311 to make a bevel on the edge face of the ophthalmic lens if it is to be mounted in a rimmed eyeglass frame;
· the finishing wheel 323 in order to form a groove in the edge face of the ophthalmic lens if it is to be mounted on a half-rimmed eyeglass frame; or
· the drill bit 321 for drilling holes through the lens if it is to be mounted on a drilled eyeglass frame.

These operations are controlled thanks to the second edging setpoint in which is stored the corrected trace.

Once the ophthalmic lens has been shaped, the optician extracts the lens from the two shafts 302 and 303 of the appliance.

Then, he mounts it into a rim of the selected frame.

At this step, he can evaluate the result in terms of sizing or in terms of fitting.

Here, the processing unit let him choose between five fitting appreciations (the lens is too small, small, ok, big, too big).

Then, this feedback information is stored in a new record of the second table of the optician's database 130.

At this step of the description, we can explain how the central organization enriches the pool of information recorded in the central database 30.

When the central organization (or an optician) orders or receives a new frame that is not referenced, it acquires the values of every attributes of this frame (name of the model, geometric features...). It can measure these values by means of the measuring unit 40 or asking for them to the frame manufacturer.

Then, a new record is created in the table 31 of the central database and this record is completed with these values. Preferably, only a specific team of the central organization is qualified to create this new record.

This invention is not restricted to the shown embodiment.

In a preferred embodiment, both databases are in the cloud, that is to say registered in web-accessible server(s).

In Figure 1, the optician's database 130 is shown as being located in the optician's premises. Thus, according to this representation, each optician has his own database.

As a variant, this optician's database could be located in the central organization server, provided that it is accessible (at least with the right of "modification") only to the considered optician. In this variant, one could even imagine a large database comprising separate tables each associated with a different optician.

In another variant, all the described tables 31, 131 could be located in a single database, but the read/write rights will not be the same for each user and for each table. For example, only the central organization will have these rights for accessing the table 31, and only one optician will have these rights for accessing the tables 131.

## Claims

1. System for edging ophthalmic lenses (20), comprising:
- a first database table (31) including first data relating to referenced eyewear frames, and
- a processing unit (100) suitable to calculate an edging setpoint as a function of at least one of said first data, said edging setpoint being a file that includes the parameters needed by a machine (200, 300) to center and/or block and/or edge an ophthalmic lens (20) and that is suitable to be used by the machine (200, 300) enabling the edging of the ophthalmic lens (20) along a final outline,
wherein the system further comprises a second database table (131) including second data relating to corrections to apply to said first data,
wherein the processing unit (100) is suitable to calculate said edging setpoint as a function of at least one of said first data, corrected by at least one of said second data, and
wherein said second data comprises a corrective parameter to be applied to said first data, **characterized in that** the value of said corrective parameter depends on the location of said machine (200, 300).

2. System according to claim 1, further comprising:
- a centering and blocking machine (200) suitable to center the ophthalmic lens (20) and to block it in a position deduced from said edging setpoint, and/or
- an edging machine (300) having tools suitable to automatically machine the edge of the ophthalmic lens (20) along said final outline according to said edging setpoint.

3. System according to claim 1 or 2, wherein said first database table (31) belongs to a first database (30) and said second database table (131) belongs to second database (130) distinct from said first database (30).

4. System according to any one of claims 1 to 3, wherein said first database table (31) comprises several records each associated with a kind of referenced eyewear frame, and wherein said records only includes invariant data.

5. System according to any one of claims 1 to 4, wherein said first database table (31) comprises, for each kind of referenced eyewear frames, at least one of the following attributes:
- a frame trace,
- an identifier,
- a geometric characteristic of this kind of referenced of eyewear frames.

6. System according to any one of claims 1 to 5, wherein said local condition comprises the local temperature.

7. System according to any one of claims 1 to 6, wherein the second data comprise various corrective parameters to be applied to corresponding first data.

8. System according to any one of claims 1 to 7, wherein the value of said corrective parameter is determined by an optician.

9. System according to any one of claims 1 to 8, wherein said second data comprises at least one feedback information relating to the accuracy of the mounting of ophthalmic lenses (20) edged by means of said machine (200, 300) into eyewear frames.

10. System according to any one of claims 1 to 9, wherein said second database table (131) is accessible to only some of the users of said first database table (31).

11. Method for edging an ophthalmic lens (20) in order to mount it into an eyewear frame, comprising:
- selecting an eyewear frame,
- read in a first database table (31) first data relating to the selected eyewear frame,
- calculating a setpoint as a function of the first data, said setpoint being a file that includes the parameters needed by a machine (200, 300) to center and/or block and/or edge an ophthalmic lens (20)
- edging said ophthalmic lens (20) along a final outline, according to said edging setpoint, by means of said machine,
- reading in a second database table (131) second data relating to the use of said first data in the local conditions of the machine (200, 300),
wherein said setpoint is calculated as a function of the first data corrected by the second data, and
wherein second data comprises a corrective parameter to be applied to said first data, the value of said corrective parameter depending on the location of said machine (200, 300).

12. Method according to claim 11, further comprising steps of:
- mounting said ophthalmic lens (20) into said frame, and
- recording a new datum into the second database table (131), said new datum depending on the accuracy of the mounting of said ophthalmic lens (20) into said frame.

13. Method according to claim 11 or 12, wherein, said first database table (31) comprising several records each associated with a kind of referenced eyewear frames, the method comprises, when an eyewear frame is acquired, steps of:
- determining if the kind of the acquired eyewear frame is registered in the first database table (31), and if not
- determining for the acquired eyewear frame the value of the first data, and
- recording, in a new record of the first database table (31), the value of the first data associated with an identifier relating to the kind of the referenced eyewear frame.

## Patentansprüche

1. System zum Kantenschleifen von Brillengläsern (20), umfassend:
- eine erste Datenbanktabelle (31), die erste Daten bezüglich referenzierten Brillengestellen enthält, und
- eine Verarbeitungseinheit (100), geeignet zum Berechnen eines Kantenschliff-Einstellpunkts als eine Funktion mindestens eines der ersten Daten, wobei der Kantenschliff-Einstellpunkt eine Datei ist, die die Parameter enthält, die von einer Maschine (200, 300) zum Zentrieren und/oder Blockieren und/oder Kantenschleifen eines Brillenglases (20) benötigt werden und die geeignet ist, von der Maschine (200, 300) verwendet zu werden, das Kantenschleifen des Brillenglases (20) entlang eines endgültigen Umrisses zu ermöglichen,
wobei das System ferner eine zweite Datenbanktabelle (131) umfasst, die zweite Daten bezüglich Korrekturen, die auf die ersten Daten anzuwenden sind, enthält, wobei die Verarbeitungseinheit (100) geeignet ist zum Berechnen des Kantenschliff-Einstellpunkts als eine Funktion mindestens eines der ersten Daten, korrigiert durch mindestens eine der zweiten Daten, und
wobei die zweiten Daten einen Korrekturparameter umfassen, der auf die ersten Daten anzuwenden ist, **dadurch gekennzeichnet, dass** der Wert des Korrekturparameters von dem Ort der Maschine (200, 300) abhängig ist.

2. System nach Anspruch 1, ferner umfassend:
- eine Zentrier- und Blockiermaschine (200), geeignet zum Zentrieren des Brillenglases (20) und zum Blockieren dieses in einer von dem Kantenschliff-Einstellpunkt abgeleiteten Position, und/oder
- eine Kantenschleifmaschine (300), die Werkzeuge aufweist, die geeignet sind zum automatischen Bearbeiten der Kante des Brillenglases (20) entlang dem endgültigen Umriss gemäß dem Kantenschliff-Einstellpunkt.

3. System nach Anspruch 1 oder 2, wobei die erste Datenbanktabelle (31) zu einer ersten Datenbank (30) gehört und die zweite Datenbanktabelle (131) zu einer zweiten Datenbank (130), die von der ersten Datenbank (30) verschieden ist, gehört.

4. System nach einem der Ansprüche 1 bis 3, wobei die erste Datenbanktabelle (31) mehrere Aufzeichnungen umfasst, jede mit einer Art von referenziertem Brillengestell assoziiert, und wobei die Aufzeichnungen nur unveränderliche Daten enthalten.

5. System nach einem der Ansprüche 1 bis 4, wobei die erste Datenbanktabelle (31) für jede Art von referenzierten Brillengestellen mindestens eines der folgenden Attribute umfasst:
- eine Rahmenspur,
- eine Kennung,
- ein geometrisches Charakteristikum dieser Art von referenzierten Brillengestellen.

6. System nach einem der Ansprüche 1 bis 5, wobei die lokale Bedingung die lokale Temperatur umfasst.

7. System nach einem der Ansprüche 1 bis 6, wobei die zweiten Daten verschiedene Korrekturparameter, die auf korrespondierende erste Daten anzuwenden sind, umfassen.

8. System nach einem der Ansprüche 1 bis 7, wobei der Wert des Korrekturparameters durch einen Optiker bestimmt wird.

9. System nach einem der Ansprüche 1 bis 8, wobei die zweiten Daten mindestens eine Rückmeldungsinformation bezüglich der Genauigkeit des Einfassens von Brillengläsern (20), die mittels der Maschine (200, 300) kantengeschliffen wurden, in Brillengestelle umfassen.

10. System nach einem der Ansprüche 1 bis 9, wobei die zweite Datenbanktabelle (131) nur für einige der Benutzer der ersten Datenbanktabelle (31) zugänglich ist.

11. Verfahren zum Kantenschleifen eines Brillenglases (20), um es in ein Brillengestell einzufassen, umfassend:
- Auswählen eines Brillengestells,
- Lesen, in einer ersten Datenbanktabelle (31), von ersten Daten bezüglich des ausgewählten Brillengestells,
- Berechnen eines Einstellpunkts als eine Funktion der ersten Daten, wobei der Einstellpunkt eine Datei ist, die die Parameter enthält, die von einer Maschine (200, 300) zum Zentrieren und/oder Blockieren und/oder Kantenschleifen eines Brillenglases (20) benötigt werden,
- Kantenschleifen des Brillenglases (20) entlang einem endgültigen Umriss gemäß dem Kantenschliff-Einstellpunkt mittels der Maschine,
- Lesen, in einer zweiten Datenbanktabelle (131), von zweiten Daten bezüglich der Verwendung der ersten Daten bei den lokalen Bedingungen der Maschine (200, 300),
wobei der Einstellpunkt als eine Funktion der ersten Daten berechnet wird, korrigiert durch die zweiten Daten, und
wobei die zweiten Daten einen Korrekturparameter umfassen, der auf die ersten Daten anzuwenden ist, wobei der Wert des Korrekturparameters von dem Ort der Maschine (200, 300) abhängig ist.

12. Verfahren nach Anspruch 11, ferner die folgenden Schritte umfassend:
- Einfassen des Brillenglases (20) in den Rahmen und
- Aufzeichnen einer neuen Datengröße in der zweiten Datenbanktabelle (131), wobei die neue Datengröße von der Genauigkeit des Einfassens des Brillenglases (20) in den Rahmen abhängig ist.

13. Verfahren nach Anspruch 11 oder 12, wobei die erste Datenbanktabelle (31) mehrere Aufzeichnungen umfasst, die jede mit einer Art von referenzierten Brillengestellen assoziiert ist, wobei das Verfahren, wenn ein Brillengestell erlangt wird, die folgenden Schritte umfasst:
- Bestimmen, ob die Art des erlangten Brillengestells in der ersten Datenbanktabelle (31) registriert ist, und wenn nicht
- Bestimmen, für das erlangte Brillengestell, des Werts der ersten Daten und
- Aufzeichnen, in einer neuen Aufzeichnung der ersten Datenbanktabelle (31), des Wert der ersten Daten, die mit einer Kennung bezüglich der Art des referenzierten Brillengestells assoziiert sind.

## Revendications

1. Système de débordage de verres ophtalmiques (20), comprenant :
- une première table de base de données (31) comportant des premières données relatives à des montures de lunettes référencées, et
- une unité de traitement (100) conçue pour calculer une consigne de débordage en fonction d'au moins une desdites premières données, ladite consigne de débordage étant un fichier comportant les paramètres nécessaires à une machine (200, 300) pour centrer et/ou bloquer et/ou déborder un verre ophtalmique (20) et pouvant être utilisé par la machine (200, 300) pour le débordage du verre ophtalmique (20) le long d'un contour final,
le système comprenant en outre une seconde table de base de données (131) comportant des secondes données relatives à des corrections à appliquer auxdites premières données,
dans lequel
l'unité de traitement (100) est conçue pour calculer ladite consigne de débordage en fonction d'au moins une desdites premières données, corrigée par au moins une desdites secondes données, et
dans lequel
lesdites secondes données comprennent un paramètre correcteur à appliquer audites premières données, **caractérisé en ce que** la valeur dudit paramètre correcteur dépend de l'emplacement de ladite machine (200, 300).

2. Système selon la revendication 1, comprenant en outre :
- une machine de centrage et de blocage (200) conçue pour centrer le verre ophtalmique (20) et le bloquer dans une position déduite à partir de ladite consigne de débordage, et/ou
- une machine de débordage (300) munie d'outils permettant d'usiner automatiquement le bord de la verre ophtalmique (20) le long dudit contour final conformément à ladite consigne de débordage.

3. Système selon la revendication 1 ou 2, dans lequel ladite première table de base de données (31) appartient à une première base de données (30) et ladite seconde table de base de données (131) appartient à une seconde base de données (130) distincte de ladite première base de données (30).

4. Système selon l'une quelconque des revendications 1 à 3, dans lequel ladite première table de base de données (31) comprend plusieurs enregistrements associés chacun à un type de monture de lunettes référencée, et dans lequel lesdits enregistrements ne comportent que des données invariantes.

5. Système selon l'une quelconque des revendications 1 à 4, dans lequel ladite première table de base de données (31) comprend, pour chaque type de montures de lunettes référencées, au moins un des attributs suivants :
- une trace de monture,
- un identifiant,
- une caractéristique géométrique du type de la monture de lunettes référencée.

6. Système selon l'une quelconque des revendications 1 à 5, dans lequel ladite condition locale comprend la température locale.

7. Système selon l'une quelconque des revendications 1 à 6, dans lequel les secondes données comprennent divers paramètres correcteurs à appliquer à des premières données correspondantes.

8. Système selon l'une quelconque des revendications 1 à 7, dans lequel la valeur dudit paramètre correcteur est déterminée par un opticien.

9. Système selon l'une quelconque des revendications 1 à 8, dans lequel lesdites secondes données comprennent au moins une information de retour relative à la précision du montage de verres ophtalmiques (20) débordés au moyen de ladite machine (200, 300) dans des montures de lunettes.

10. Système selon l'une quelconque des revendications 1 à 9, dans lequel ladite seconde table de base de données (131) n'est accessible qu'à certains des utilisateurs de ladite première table de base de données (31).

11. Procédé de débordage d'une verre ophtalmique (20) afin de le monter dans une monture de lunettes, comprenant :
- la sélection d'une monture de lunettes,
- la lecture dans une première table de base de données (31) de premières données relatives à la monture de lunettes sélectionnée,
- le calcul d'une consigne en fonction des premières données, ladite consigne étant un fichier comportant les paramètres nécessaires à une machine (200, 300) pour centrer et/ou bloquer et/ou déborder un verre ophtalmique (20),
- le débordage dudit verre ophtalmique (20) le long d'un contour final, conformément à ladite consigne de débordage, au moyen de ladite machine,
- la lecture dans une seconde table de base de données (131) de secondes données relatives à l'utilisation desdites premières données dans les conditions locales de la machine (200, 300),
dans lequel
ladite consigne est calculée en fonction des premières données corrigées par les secondes données, et
dans lequel
lesdites secondes données comprennent un paramètre correcteur à appliquer auxdites premières données, la valeur dudit paramètre correcteur dépendant de l'emplacement de ladite machine (200, 300).

12. Procédé selon la revendication 11, comprenant en outre les étapes suivantes :
- le montage dudit verre ophtalmique (20) dans ladite monture, et
- l'enregistrement d'une nouvelle donnée dans la seconde table de la base de données (131), ladite nouvelle donnée dépendant de la précision du montage dudit verre ophtalmique (20) dans ladite monture.

13. Procédé selon la revendication 11 ou 12, dans lequel, ladite première table de base de données (31) comprenant plusieurs enregistrements associés chacun à un type de montures de lunettes référencées, le procédé comprend, lors de l'acquisition d'une monture de lunettes, les étapes suivantes :
- la détermination que le type de la monture de lunettes acquise est enregistré ou non dans la première table de la base de données (31), et s'il ne l'est pas,
- la détermination pour la monture de lunettes acquise de la valeur des premières données, et
- l'enregistrement, dans un nouvel enregistrement de la première table de la base de données (31), de la valeur des premières données associées à un identifiant relatif au type de la monture de lunettes référencée.
